# EUROPEAN PATENT SPECIFICATION

(11) **EP 2 288 215 B1**
(45) Date of publication and mention of the grant of the patent: **17.07.2019**
(21) Application number: 09290623.9
(22) Date of filing: 12.08.2009
(51) Int. Cl.: H04W 28/26, H04B 7/26, H04W 84/04

(54) **Transportation of sensor and/or actuator data over a wireless access network**
Übertragung von Sensor- und/oder Aktuatordaten über ein drahtloses Zugangsnetzwerk
Transport de données de capteur et/ou d'actionneur dans un réseau d'accès sans fil

(43) Date of publication of application: 23.02.2011
(73) Proprietor: Alcatel Lucent, 91620 Nozay (FR)
(72) Inventor: Halbauer, Hardy, 76275 Ettlingen (DE); Chen, Yejian, 70191 Stuttgart (DE); Saur, Stephan, 70567 Stuttgart (DE)
(74) Representative: Nokia EPO representatives

(56) References cited:
- EP-A2- 1 626 532
- US-A1- 2002 114 307
- US-A1- 2006 023 643
- US-A1- 2007 149 117
- US-A1- 2007 188 322
- US-B1- 7 020 701
- US-B1- 7 058 076
- LIM KHENG KAIT ET AL: "Paddy Growth Monitoring with Wireless Sensor Networks" INTELLIGENT AND ADVANCED SYSTEMS, 2007. ICIAS 2007. INTERNATIONAL CONFERENCE ON, IEEE, PISCATAWAY, NJ, USA, 25 November 2007 (2007-11-25), pages 966-970, XP031397696 ISBN: 978-1-4244-1355-3
- R. El Azouzi, R. El-Khouri, A Kobbane, E. Sabir: "On extending coverage of UMTS networks using an ad-hoc network with weighted fair queuing" A.Das et al. NETWORKING 2008, LNCS 4982 2008, pages 135-148, XP002565914 Retrieved from the Internet: URL:http://www.springerlink.com/content/d7 36200m5l1574g7/fulltext.pdf> [retrieved on 2010-01-27]

## Description

### Field of the Invention

The invention relates to the field of telecommunications, and, more particularly, to data transfer between a plurality of sensors / actuators and at least one appropriate destination in a core network for evaluation and/or storage of the transferred data.

### Background

This section introduces aspects that may be helpful in facilitating a better understanding of the invention.

Sensor / actuator networks usually aggregate data from many sensors or distribute/dispart data for many actuators located within an area and need to transfer this aggregated data to an appropriate destination in the core network for evaluation and storage. The sensors / actuators constitute a network with an extremely high number of devices, but typically only small traffic / data capacity requirements with respect to one single device. In order to provide a data exchange of the sensors / actuators with the central point, a dedicated wireless access network for the sensor / actuator data may be provided. However, for establishing such a wireless access network, considerable expenditures are required.

The article "Paddy Growth Monitoring with Wireless Sensor Networks", Lim Kheng Kait et al., International Conference on Intelligent and Advanced Systems 2007, IEEE, pages 966-970, presents a system of Paddy Growth Monitoring with Wireless Sensor Networks. In the network, data is forwarded to a base station via multi-hop communication among the sensor nodes. The aggregated data may be processed locally at the base station or transmitted from the base station to a remote server over the Internet for further data processing.

US 2007/0188322 A1 discloses a security system for sea cargo containers, each container being provided with a container security device. When the containers are within the range of each other, the container security devices communicate to form an ad hoc wireless sensor network. That wireless network communicates with a communications infrastructure via a wireless bridge that aggregates data originating from the various container security devices and transmits that data to the communications infrastructure.

### Summary of the Invention

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later. The invention is defined by the claims.

According to one aspect of the invention, a method according to claim 1 is provided for exchanging data between a plurality of sensors and/or actuators and a core network. The method comprises: aggregating , sensor data transmitted from the plurality of sensors before transporting the aggregated sensor data over a wireless network to the core network, and/or disparting, aggregated actuator data received from the core network over the wireless access network before transmitting the actuator data to (specific ones) of the plurality of actuators, wherein only part of the radio resources of the wireless access network are used for the exchange of the sensor and/or actuator data.

The inventors propose to use existing wireless access networks (WiMAX, LTE, etc., and their evolutions) to support data collection and aggregation of sensors / actuators located within the area of these wireless systems. However, these systems will not be used exclusively for transporting the sensor and/or actuator data, but also for transporting other types of data, typically user data which is transmitted to / from conventional wireless terminals being arranged in the area of the radio access system, i.e. only a subset of the resources given by the wireless access system are used for the transfer of sensor / actuator data. Consequently, already established radio access networks may be re-used for transmitting the sensor / actuator data. The aggregation / distribution of the sensor / actuator data is performed in a dedicated unit arranged in the wireless access system, namely in a relay station, as will be explained in greater detail below.

The method further comprises: reserving, in a base station being connected to the core network, dedicated radio resources for exchanging data between a relay station and the plurality of sensors and/or actuators, and using the reserved radio resources for transporting the sensor and/or actuator data. The sensor / actuator data may be transported in specific PHY layer resources, in particular time / frequency resources, reserved for this purpose. The data transmitted / received in the reserved resources is then aggregated in the wireless access network and transferred via the backbone to the appropriate destination in the core network.

The sensor and/or actuator data is transported using sensor and/or actuator-specific PHY layer and/or MAC layer protocols or principles for the reserved radio resources. These protocols or principles may be adapted to the specific needs of the transmissions to / from the sensors and actuators which typically constitute an extremely high number of devices, but have only small traffic / data capacity requirements with respect to one single device, such that only low data transfer rates to the actuators / sensors are typically needed, which may be taken into account in the specific protocols or principles.

The use of sensor and/or actuator specific PHY layer and MAC layer protocols or principles is intended to reduce the signaling overhead needed for the communications of sensors and/or actuators with a device adapted for aggregating/distributing the data which would be needed with conventional PHY layer and MAC layer protocols or principles. This, finally, helps to extend the battery life time of the sensors and/or actuators. Moreover, sensor and/or actuator specific PHY layer and MAC layer protocols or principles may be needed due to limited capabilities of the sensors and/or actuators e.g. related to supported frequency bands, maximal transmit power, power amplification, limited processing power in low-cost devices etc.

In the method, aggregating the sensor data and distributing the actuator data are performed in a relay station devised as a mobile station being adapted for communication with a base station. The aggregation of the sensor data / the distribution of the aggregated actuator data is performed in the relay station, only the aggregated sensor / actuator data being transmitted to and/or received from a base station of the wireless access network, the latter being connected to the core network. Within the relay station, the sensor data is aggregated and transferred via a regular connection of the wireless access network to the base station, and from there via the backbone to an appropriate destination in the core network. Specific (time and frequency) resources are reserved for transporting the aggregated data, and, although the aggregation is performed in the relay station, these resources are still reserved in the base station. The relay station - which is devised as a mobile station - supports data exchange with sensors / actuators on a specific radio resource in the same frequency band as the communication with the base station.

The relay station may communicate with the base station for signalling a communication status of the relay station with a respective sensor and/or actuator. Thus, the base station will be aware of the resources to be used for communication with the sensors / actuators, either to keep these resources free for maintaining communications with the sensors / actuators, or to be aware of potential distortions of the signal due to asynchronous transmission of the sensors / actuators or the relay station on these resources and resolving them e.g. by using Hybrid Automatic Repeat Request (HARQ) or other procedures devised for this purpose being known in the art. However, a communication of the relay / mobile station with the sensors and actuators may not be possible in some cases. Therefore, the relay / mobile station should have the possibility to signal to the base station whether it communicates with a sensor or actuator on the specific (reserved) resources. Based on the information provided by the relay station, the base station may then decide to keep the specific resources reserved or to free them for communications with other wireless terminals, not being devised as sensors / actuators.

In the case described above, the wireless access system needs to set up a communication link between the relay / mobile station and the base station for sensor / actuator communication. This is typically done within the normal communication procedures between the relay / mobile station and the base station(s).

A person of skill in the art will readily recognize that various steps of the above-described method can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of the above-described methods. The program storage devices may be, e.g., digital memories, magnetic storage media such as magnetic discs and magnetic tapes, hard drives, or optically readable digital data storage media. The embodiments are also intended to cover computers, in particular field programmable gate arrays (FPGA), application-specific integrated circuits (ASIC), or digital signal processors (DSP) programmed to perform the steps of the above-described method(s). Other hardware conventional and/or custom may also be included.

A further aspect of the invention is provided in a wireless access network in accordance with claim 3. The wireless access network may be devised to comply with the IEEE 802.16 (WiMAX), IEEE 802.11a/g (WLAN), or 3GPP eUTRAN (LTE/LTE-Advanced) standard. It will be understood that the wireless access network may be devised to comply with (current or future) standards being different from the ones mentioned above. The wireless access network comprises a base station connected to a core network and at least one relay station. The relay station is part of a standardized wireless communication network, thus allowing to re-use existing infrastructure for transporting of sensor / actuator data.

It will be understood that although sensors typically only transmit sensor data in the uplink, it may also possible to transmit data (e.g. for adjusting timing intervals, calibrations etc.) to the sensors in the downlink. In a similar way, the actuators may not only receive actuator data, but may also be adapted to transmit (e.g. actuator-specific) data in the uplink direction. The relay station may thus also be adapted to dispart aggregated sensor data which is to be provided to the sensors, and/or to aggregate actuator data which is to be provided to a centralized unit in the core network. One skilled in the art will also appreciate that different types of sensors may be provided, being adapted to measure one or more physical quantities such as temperature, pressure, radiation, etc. Also, different types of actuators may be provided, being devised e.g. as linear motors, piezo elements, etc.

It is advantageous when the relay station is adapted for signalling a communication status with a respective sensor and/or actuator to the base station, such that the base station decides whether or not to reserve specific resources for the communication to that sensor / actuator. In particular, if the communication to the sensor / actuator fails, it will be possible to free the corresponding resources for the transfer of data, e.g. user data, which is not related to the sensors / actuators.

Further features and advantages are stated in the following description of exemplary embodiments, with reference to the figures of the drawing, which shows significant details, and are defined by the claims.

### Brief Description of the Drawings

Exemplary embodiments are shown in the diagrammatic drawing and are explained in the description below. The following are shown:
- **Fig. 1a,b**: show schematic diagrams of a wireless access network not in accordance with the invention (Fig. 1a) and of an embodiment of a wireless access network according to the invention (Fig. 1b), and
- **Fig. 2a,b**: show an example of the resource allocation of the wireless access network of Fig. 1a and Fig. 1b, respectively.

### Detailed Description of Preferred Embodiments

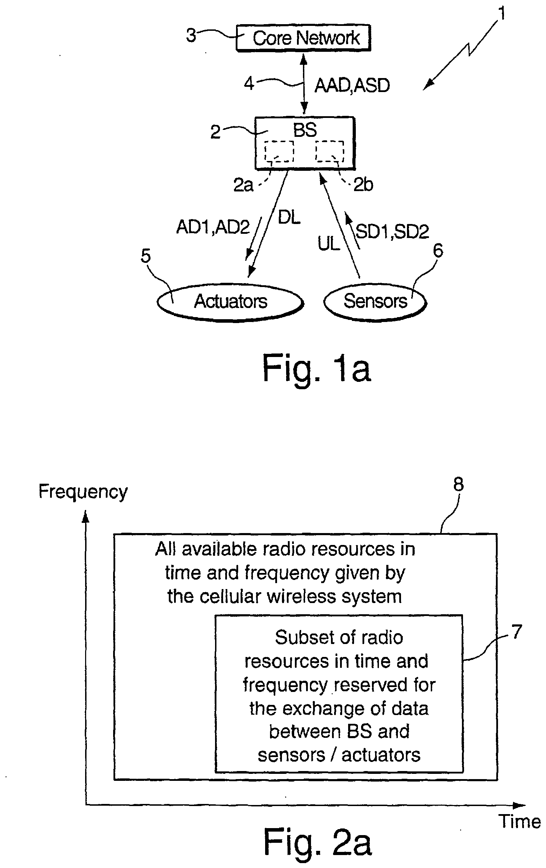

**Fig. 1a** shows a wireless access network **1** having a base station **2** as a transceiver unit being adapted for performing communications to a core network **3.** Typically, the core network 3 is a packet-based computer network (IP network), the wireless access network 1, resp., the base station 2 being connected to the core network 3 via a backhaul connection **4** (e.g. cable, fiber, wireless connection). It will be understood that the wireless access network 1 may comprise one or more base station(s) 2, and that the wireless access network 1 may be devised in accordance with at least one communication standard, being e.g. of the IEEE 802.16 (WiMAX), IEEE 802.11a/g (WLAN), or 3GPP eUTRAN (LTE/LTE-Advanced) type.

The wireless communication network 1, resp., the base station 2 is adapted to perform wireless communications with a plurality of wireless terminals (not shown), the terminals being devised e.g. as mobile phones, PDAs, etc. allowing their users to access the core network 3. In addition, within the area of the wireless system 1, a plurality of actuators **5** and sensors **6** are located.

The multiple sensors 6 and actuators 5 maintain radio links to the base station 2. For these radio links, specific resources **7** in time and frequency (a subset of the resources **8** of the overall wireless access system 1) are reserved by the base station 2, see **Fig. 2a****.** It will be understood that alternatively or in addition, a subset of resources being of a different type, e.g. code or spatial resources, may be reserved for the communication with the sensors 6 and actuators 5. The resource allocation may be performed dynamically, in dependence of the number of sensors and actuators 6, 5 requiring access to the core network 3. Typically, for the radio links **DL, UL** with the sensors 6 and actuators 5, sensor and/or actuator specific PHY and MAC protocols may be used, taking the specific transmission conditions to the sensors/actuators 6, 5 into account, namely that the sensors/actuators 6, 5 constitute a network with an extremely high number of devices, but typically only small traffic/data capacity requirements with respect to one single device.

The base station 2 comprises an aggregation unit **2b** being adapted for aggregating sensor data **SD1, SD2** transmitted from respective ones of the sensors 6 in order to pass the sensor data SD1, SD2 in the form of aggregated sensor data **ASD** to the core network 3. In a disparting unit **2a,** the base station 2 segments aggregated actuator data **AAD** received from the core network 3 and passes it in the form of actuator data **AD1, AD2** to respective ones of the actuators 5. The base station 2 may further be adapted to invoke the sensors/actuators 6, 5 to an active mode or to a sleep mode, The aggregated sensor data ASD may be provided to an appropriate destination (e.g. a data server, not shown) arranged in the core network 3, which is adapted to store and/or evaluate the (aggregated) sensor data, and to generate (aggregated) actuator data AAD which is then transmitted over the wireless access network 1 to the actuators 5.

The solution described above allows communication with the sensors / actuators 6, 5 distributed within an area where a cellular wireless access system 1 is available, thus dispensing with the need for a separate sensor/actuator network, i.e., communication with the sensors / actuators 6, 5 is embedded into existing infrastructure.

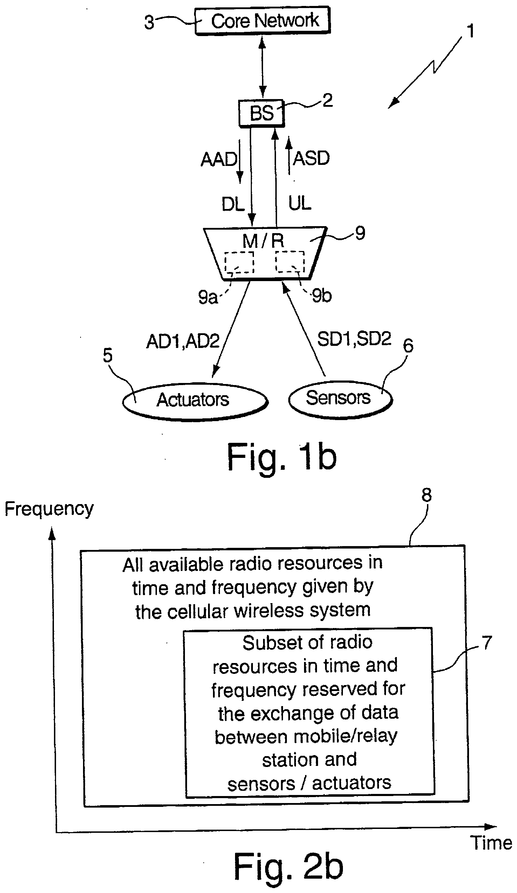

An example of an implementation of the inventive concept will be described in the following with respect to Fig. 1b, showing a wireless communication network 1 which has an additional transceiver unit in the form of a relay station **9,** which is devised as a mobile station. In this case, the base station 2 does not need to maintain dedicated links to the sensors/actuators 6, 5, but only one regular connection may be established between the base station 2 and the relay/mobile station 9 of the wireless access system 1.

The relay station 9 supports data exchange with the sensors 6 / actuators 5 on specific radio resources in the same frequency band as the communication with the base station 2 (shown in **Fig. 2b**).

The base station 2 should be aware of the resources to be used for the communication with the sensors/actuators 6, 5 either to keep these resources free, or, in particular, to be aware of potential distortions of the signal due to asynchronous transmission of the sensors/actuators 6, 5 or the relay station 9 on these resources 7 in order to resolve these problems by e.g. ARQ, HARQ or other procedures suited for this purpose.

However, a communication of the relay station 9, e.g. a mobile station, with the sensors 6 and the actuators 5 may nevertheless be impossible in some cases. Therefore, the relay / mobile station 9 has the possibility to signal to the base station 2 whether or not it communicates with a specific one of the sensors 6 / actuators 5 on the specific reserved resources 7. Based on this communication, the base station 2 may decide to keep the specific resources reserved for the communication with the sensors/actuators 6, 5, or to free them for communication with other wireless (user) terminals, e.g. mobile phones, PDAs, etc. (not shown).

The mobile / relay station 9 may be installed within sensor/actuator areas and aggregates /disparts the sensor/actuator data SD1, SD2, AD1, AD2 in an aggregation unit **9b,** resp., in a disparting unit **9a** for transmission of the aggregated data AAD, ASD on the normal, i.e. not sensor/actuator-specific resources 8 of the wireless access system 1.

The wireless access network 1 may be enabled to set up a communication link between the relay/mobile station 9 and the base station 2 for sensor/actuator communication. This is typically done within the normal communication procedures between relay/mobile station 9 and base station 2.

The above description of the preferred embodiments has been given by way of example. From the disclosure given, those skilled in the art will not only understand the present invention and its attendant advantages, but will also find apparent various changes and modifications to the structures and methods disclosed. The scope of the invention is defined by the appended claims.

## Claims

1. Method for exchanging data (SD1, SD2; AD1, AD2) between a plurality of sensors (6) and/or actuators (5) and a core network (3), the method comprising:
aggregating sensor data (SD1, SD2) transmitted from the plurality of sensors (6) before transporting the aggregated sensor data (ASD) over a wireless access network (1) to the core network (3), and/or
disparting aggregated actuator data (AAD) received from the core network (3) over the wireless access network (1) before transmitting the actuator data (AD1, AD2) to the plurality of actuators (5), only part of the radio resources (8) of the wireless access network (1) being used for the exchange of the sensor and/or actuator data (SD1, SD2; AD1, AD2),
the method further comprising: reserving, in a base station (2) being connected to the core network (3), dedicated radio resources (7) for exchanging data between a relay station (9) and the plurality of sensors (6) and/or actuators (5), and
using the reserved radio resources (7) for transporting the sensor and/or actuator data (SD1, SD2; AD1, AD2), wherein the sensor and/or actuator data (SD1, SD2; AD1, AD2) are transported using sensor and/or actuator-specific PHY layer and/or MAC layer protocols for the reserved radio resources (7),
aggregating the sensor data (SD1, SD2) and disparting the actuator data (AD1, AD2) is performed in the relay station (9) devised as a mobile station, wherein the relay station (9) transmits and/or receives the aggregated data (AAD, ASD) to / from the base station (2) over a regular connection of the wireless access network (1) and performs data exchange with the sensors (6) and/or actuators (5) on radio resources in the same frequency band as the communication with the base station (2), wherein the dedicated radio resources (7) in time and frequency reserved for transporting the sensor and/or actuator data (SD1, SD2; AD1, AD2) are a subset of the radio resources (8) in time and frequency of the wireless access network (1), and wherein the base station (2) keeps the subset of the radio resources (8) of the wireless access network (1) reserved for the exchange of the sensor and/or actuator data (SD1, SD2; AD1, AD2).

2. Method according to claim 1, wherein the relay station (9) communicates with the base station (1) for signalling a communication status of the relay station (9) with a respective sensor (6) and/or actuator (5).

3. Wireless access network (1), in particular according to the IEEE 802.16, IEEE 802.11a/g, or 3GPP eUTRAN standard, comprising:
a base station (2) connected to a core network (3), and
at least one relay station (9) devised as a mobile station and adapted for performing communications over the wireless access network (1), the relay station (9) comprising:
an aggregating unit (2a, 9a) for aggregating sensor data (SD1, SD2) received from a plurality of sensors (6) for transportation of the aggregated sensor data (ASD) over the wireless access network (1) to the core network (3), and/or
a disparting unit (2b, 9b) for disparting aggregated actuator data (AAD) received from the core network (3) over the wireless access network (1) for transmission of the actuator data (AD1, AD2) to a plurality of actuators (5), the relay station (9) being adapted:
to perform data exchange with the sensors (6) and/or actuators (5) on dedicated radio resources (7) in the same frequency band as the communication with the base station (2),
to transport the sensor and/or actuator data (SD1, SD2, AD1 , AD2) using sensor and/or actuator-specific PHY layer and/or MAC layer protocols,
to transmit the aggregated sensor data (ASD) to the base station (2) of the wireless access network (1) over a regular connection of the wireless access network (1) and/or to receive the aggregated actuator data (AAD) from the base station (2) over a regular connection of the wireless access network (1), wherein only part of the resources (8) of the wireless access network (1) are used for the exchange of the sensor and/or actuator data (SD1, SD2; AD1, AD2), wherein the dedicated radio resources (7) in time and frequency reserved for transporting the sensor and/or actuator data (SD1, SD2; AD1, AD2) are a subset of the radio resources (8) in time and frequency of the wireless access network (1),
wherein the base station (2) is adapted:
to reserve said dedicated radio resources (7) for exchanging data between the relay station (9) and the plurality of sensors (6) and/or actuators (5), and to keep the subset of the radio resources (8) of the wireless access network (1) reserved for the exchange of the sensor and/or actuator data (SD1, SD2; AD1, AD2).

4. Wireless access network according to claim 3, wherein the relay station (9) is adapted for signalling a communication status with a respective sensor (6) and/or actuator (5) to the base station (2).

## Patentansprüche

1. Verfahren zum Austauschen von Daten (SD1, SD2; AD1, AD2) zwischen einer Vielzahl von Sensoren (6) und/oder Aktuatoren (5) und einem Kernnetz (3), wobei das Verfahren umfasst:
Aggregieren von Sensordaten (SD1, SD2), die von der Vielzahl von Sensoren (6) übertragen werden, vor dem Transportieren der aggregierten Sensordaten (ASD) über ein drahtloses Zugangsnetz (1) zu dem Kernnetz (3), und/oder
Teilen von aggregierten Aktuatordaten (AAD), die von dem Kernnetz (3) über das drahtlose Netz (1) empfangen werden, vor dem Übertragen der Aktuatordaten (AD1, AD2), zu der Vielzahl von Aktuatoren (5), wobei nur ein Teil der Funkressourcen (8) des drahtlosen Zugangsnetzes (1) für den Austausch der Sensor- und/oder Aktuatordaten (SD1, SD2; AD1, AD2) verwendet wird;
wobei das Verfahren ferner umfasst:
Reservieren, in einer Basisstation (2), die mit dem Kernnetz (3) verbunden ist, von dedizierten Funkressourcen (7) zum Austauschen von Daten zwischen einer Relaisstation (9) und der Vielzahl von Sensoren (6) und/oder Aktuatoren (5); und
Verwenden der reservieren Funkressourcen (7) zum Transportieren der Sensor- und/oder Aktuatordaten (SD1, SD2; AD1, AD2), wobei die Sensor- und/oder Aktuatordaten (SD1, SD2; AD1, AD2) unter Verwendung von einer Sensor- und/oder Aktuator-spezifischen PHY Schicht und/oder MAC Schichtprotokollen für die reservierten Funkressourcen (7) transportiert werden;
wobei das Aggregieren der Sensordaten (SD1, SD2) und Teilen der Aktuatordaten (AD1, AD2) in der Relaisstation (9) vorgenommen werden, die als Mobilstation ausgelegt ist, wobei die Relaisstation (9) die aggregierten Daten (AAD, ASD) von/zu der Basisstation (2) über eine reguläre Verbindung des drahtlosen Zugangsnetzes (1) überträgt und/oder empfängt, und den Datenaustausch mit den Sensoren (6) und/oder Aktuatoren (5) auf Funkressourcen in demselben Frequenzband wie die Kommunikation mit der Basisstation (2) vornimmt, wobei die dedizierten Funkressourcen (7), die in der Zeit und Frequenz zum Transportieren der Sensor- und/oder Aktuatordaten (SD1, SD2; AD1, AD2) reserviert werden, ein Subsatz der Funkressourcen (8) in der Zeit und Frequenz des drahtlosen Zugangsnetzes (1) sind, und wobei die Basisstation (2) den Subsatz der Funkressourcen (8) des drahtlosen Zugangsnetzes (1) für den Austausch der Sensor- und/oder Aktuatordaten (SD1, SD2; AD1, AD2) reserviert hält.

2. Verfahren nach Anspruch 1,
wobei die Relaisstation (9) mit der Basisstation (1) kommuniziert, um einen Kommunikationsstatus der Relaisstation (9) mit einem jeweiligen Sensor (6) und/oder Aktuator (5) zu signalisieren.

3. Drahtloses Zugangsnetz (1), insbesondere gemäß dem Standard IEEE 802.16, IEEE 802.11 a/g oder 3GPP eUTRAN, umfassend:
eine Basisstation (2), die mit einem Kernnetz (3) verbunden ist, und
mindestens eine Relaisstation (9), die als Mobilstation ausgelegt und geeignet ist, Kommunikationen über das drahtlose Zugangsnetz (1) vorzunehmen, wobei die Relaisstation (9) umfasst:
eine Aggregationseinheit (2a, 9a) zum Aggregieren von Sensordaten (SD1, SD2), die von einer Vielzahl von Sensoren (6) empfangen werden, um die aggregierten Sensordaten (ASD) über das drahtlose Zugangsnetz (1) zu dem Kernnetz (3) zu transportieren, und/oder eine Teilungseinheit (2b, 9b) zum Teilen von aggregierten Aktuatordaten (AAD), die von dem Kernnetz (3) über das drahtlose Zugangsnetz (1) empfangen werden, um die Aktuatordaten (AD1, AD2) zu einer Vielzahl von Aktuatoren (5) zu übertragen, wobei die Relaisstation (9) geeignet ist:
einen Datenaustausch mit den Sensoren (6) und/oder Aktuatoren (5) auf dedizierten Funkressourcen (7) in demselben Frequenzband wie die Kommunikation mit der Basisstation (2) vorzunehmen,
die Sensor- und/oder Aktuatordaten (SD1, SD2, AD1, AD2) unter Verwendung von einer Sensor- und/oder Aktuator-spezifischen PHY Schicht und/oder MAC Schichtprotokollen zu transportieren,
die aggregierten Sensordaten (ASD) zu der Basisstation (2) des drahtlosen Zugangsnetzes (1) über eine reguläre Verbindung des drahtlosen Zugangsnetzes (1) zu übertragen, und/oder die aggregierten Aktuatordaten (AAD) von der Basisstation (2) über eine reguläre Verbindung des drahtlosen Zugangsnetzes (1) zu empfangen, wobei nur ein Teil der Ressourcen (8) des drahtlosen Zugangsnetzes (1) für den Austausch der Sensor- und/oder Aktuatordaten (SD1, SD2; AD1, AD2) verwendet wird, wobei die dedizierten Funkressourcen (7), die in der Zeit und Frequenz zum Transportieren der Sensor- und/oder Aktuatordaten (SD1, SD2; AD1, AD2) reserviert werden, ein Subsatz der Funkressourcen (8) in der Zeit und Frequenz des drahtlosen Zugangsnetzes (1) sind,
wobei die Basisstation (2) geeignet ist:
die dedizierten Funkressourcen (7) für das Austauschen von Daten zwischen der Relaisstation (9) und der Vielzahl von Sensoren (6) und/oder Aktuatoren (5) zu reservieren, und den Subsatz der Funkressourcen (8) des drahtlosen Zugangsnetzes (1) für den Austausch der Sensor- und/oder Aktuatordaten (SD1, SD2; AD1, AD2) reserviert zu halten.

4. Drahtloses Zugangsnetz nach Anspruch 3,
wobei die Relaisstation (9) geeignet ist, einen Kommunikationsstatus mit einem jeweiligen Sensor (6) und/oder Aktuator (5) an die Basisstation (2) zu signalisieren.

## Revendications

1. Procédé d'échange de données (SD1, SD2 ; AD1, AD2) entre une pluralité de capteurs (6) et/ou d'actionneurs (5) et un réseau central (3), le procédé comprenant :
le regroupement de données de capteur (SD1, SD2) émises à partir de la pluralité de capteurs (6) avant le transport des données de capteur regroupées (ASD) via un réseau d'accès sans fil (1) jusqu'au réseau central (3), et/ou
la séparation de données d'actionneur regroupées (AAD) reçues du réseau central (3) via le réseau d'accès sans fil (1) avant l'émission des données d'actionneur (AD1, AD2) à la pluralité d'actionneurs (5), seule une partie des ressources radio (8) du réseau d'accès sans fil (1) étant utilisée pour l'échange des données de capteur et/ou d'actionneur (SD1, SD2 ; AD1, AD2),
le procédé comprenant en outre : la réservation, dans une station de base (2) en cours de connexion au réseau central (3), de ressources radio dédiées (7) pour échanger des données entre une station relais (9) et la pluralité de capteurs (6) et/ou d'actionneurs (5), et
l'utilisation des ressources radio réservées (7) pour transporter les données de capteur et/ou d'actionneur (SD1, SD2 ; AD1, AD2), dans lequel les données de capteur et/ou d'actionneur (SD1, SD2 ; AD1, AD2) sont transportées en utilisant des protocoles de couche PHY et/ou de couche MAC spécifiques aux capteurs et/ou spécifiques aux actionneurs pour les ressources radio (7) réservées,
le regroupement des données de capteur (SD1, SD2) et la séparation des données d'actionneur (AD1, AD2) sont effectués dans la station relais (9) conçue comme une station mobile, dans lequel la station relais (9) émet et/ou reçoit les données regroupées (AAD, ASD) à destination ou en provenance de la station de base (2) par une connexion régulière du réseau d'accès sans fil (1) et effectue un échange de données avec les capteurs (6) et/ou les actionneurs (5) sur des ressources radio dans la même bande de fréquence que la communication avec la station de base (2), dans lequel les ressources radio dédiées (7) en temps et en fréquence réservées pour transporter les données de capteur et/ou d'actionneur (SD1, SD2 ; AD1, AD2) sont un sous-ensemble des ressources radio (8) en temps et en fréquence du réseau d'accès sans fil (1), et dans lequel la station de base (2) maintient la réservation du sous-ensemble des ressources radio (8) du réseau d'accès sans fil (1) pour l'échange des données de capteur et/ou d'actionneur (SD1, SD2 ; AD1, AD2).

2. Procédé selon la revendication 1, dans lequel la station relais (9) communique avec la station de base (1) pour signaler un état de communication de la station relais (9) avec un capteur (6) et/ou un actionneur (5) respectif.

3. Réseau d'accès sans fil (1), en particulier selon la norme IEEE 802.16, IEEE 802.11a/g ou 3GPP eUTRAN, comprenant :
une station de base (2) connectée à un réseau central (3), et
au moins une station relais (9) conçue comme une station mobile et adaptée pour effectuer des communications via le réseau d'accès sans fil (1), la station relais (9) comprenant :
une unité de regroupement (2a, 9a) pour regrouper des données de capteur (SD1, SD2) reçues d'une pluralité de capteurs (6) pour le transport des données de capteur regroupées (ASD) via le réseau d'accès sans fil (1) jusqu'au réseau central (3), et/ou
une unité de séparation (2b, 9b) pour séparer des données d'actionneur regroupées (AAD) reçues du réseau central (3) via le réseau d'accès sans fil (1) pour émettre les données d'actionneur (AD1, AD2) à une pluralité d'actionneurs (5), la station relais (9) étant adaptée pour :
effectuer un échange de données avec les capteurs (6) et/ou les actionneurs (5) sur des ressources radio dédiées (7) sur la même bande de fréquence que la communication avec la station de base (2),
transporter les données de capteur et/ou d'actionneur (SD1, SD2, AD1, AD2) en utilisant des protocoles de couche PHY et/ou de couche MAC spécifiques aux capteurs et/ou spécifiques aux actionneurs,
émettre les données de capteur regroupées (ASD) à la station de base (2) du réseau d'accès sans fil (1) sur une connexion régulière du réseau d'accès sans fil (1) et/ou recevoir les données d'actionneur regroupées (AAD) de la station de base (2) via une connexion régulière du réseau d'accès sans fil (1), dans lequel seule une partie des ressources (8) du réseau d'accès sans fil (1) est utilisée pour l'échange des données de capteur et/ou d'actionneur (SD1, SD2 ; AD1, AD2), dans lequel les ressources radio dédiées (7) en temps et en fréquence réservées pour transporter les données de capteur et/ou d'actionneur (SD1, SD2 ; AD1, AD2) sont un sous-ensemble des ressources radio (8) en temps et en fréquence du réseau d'accès sans fil (1),
dans lequel la station de base (2) est adaptée pour :
réserver lesdites ressources radio (7) dédiées pour échanger des données entre la station relais (9) et la pluralité de capteurs (6) et/ou d'actionneurs (5), et pour maintenir la réservation du sous-ensemble des ressources radio (8) du réseau d'accès sans fil (1) réservées pour l'échange des données de capteur et/ou d'actionneur (SD1, SD2 ; AD1, AD2).

4. Réseau d'accès sans fil selon la revendication 3, dans lequel la station relais (9) est adaptée pour signaler un état de communication avec un capteur (6) et/ou un actionneur (5) respectif à la station de base (2) .
